# EUROPÄISCHE PATENTSCHRIFT

(11) **EP 2 157 309 B1**
(45) Veröffentlichungstag und Bekanntmachung des Hinweises auf die Patenterteilung: **12.03.2014**
(21) Anmeldenummer: 09167606.4
(22) Anmeldetag: 11.08.2009
(51) Int. Cl.: F02M 25/07, F01N 3/021

(54) **Brennkraftmaschine**
Combustion engine
Moteur à combustion interne

(30) Priorität: 18.08.2008 DE 102008038235
(43) Veröffentlichungstag der Anmeldung: 24.02.2010
(73) Patentinhaber: Mahle International GmbH, 70376 Stuttgart (DE)
(72) Erfinder: Sauter, Hartmut, 71272 Renningen (DE); Schwalk, Bernhard, 71634 Ludwigsburg (DE); Drespling, Hans-Peter, 89522 Heidenheim (DE)
(74) Vertreter: Bernhard, Uwe

(56) Entgegenhaltungen:
- EP-A1- 1 936 175
- WO-A2-2007/079138
- DE-A1- 3 833 957
- DE-A1- 3 919 533
- DE-A1-102006 038 706

## Beschreibung

Die vorliegende Erfindung betrifft eine Brennkraftmaschine, insbesondere in einem Kraftfahrzeug, mit den Merkmalen des Oberbegriffs des Anspruchs 1. Außerdem betrifft die Erfindung eine Filtereinrichtung für eine solche Brennkraftmaschine.

Eine Brennkraftmaschine, wie sie bei Kraftfahrzeugen zur Anwendung kommt, weist einen Motorblock auf, der in einer zentralen Zylinderbank oder in mehreren Zylinderbänken Brennräume enthält. Diese sind in Zylindern ausgebildet, in denen Kolben hubverstellbar angeordnet sind. Insoweit handelt es sich hier um einen Kolbenmotor, z. Bsp. um einen Dieselmotor oder um einen Benzinmotor. Zum Zuführen von Frischluft zu den Brennräumen weist die Brennkraftmaschine eine Frischluftanlage auf. Ferner ist eine Abgasanlage zum Abführen von Abgas von den Brennräumen vorhanden. Zur Verbesserung von Emissionswerten und Verbrauchswerten können moderne Brennkraftmaschinen mit einer Abgasrückführanlage ausgestattet sein, mit deren Hilfe Abgas von der Abgasanlage zur Frischluftanlage rückgeführt wird.

Desweiteren können moderne Brennkraftmaschinen mit einer Ladeeinrichtung zur Erhöhung des Druckniveaus in der der Brennkraftmaschine zugeführten Frischluft, ausgestattet sein, was zur Leistungssteigerung der Brennkraftmaschine genutzt wird. Für die Abgasrückführung ist es bei solchen aufgeladenen Brennkraftmaschinen üblich, die Abgasrückführanlage als Hochdruck-Abgasrückführanlage auszugestalten. Das bedeutet, dass eine Entnahmestelle, in der die Abgasrückführanlage an die Abgasanlage angeschlossen ist, stromauf einer Turbine eines Abgasturboladers positioniert ist, während eine Einleitstelle, in der die Abgasrückführanlage an die Frischluftanlage angeschlossen ist, stromab eines Verdichters des Abgasturboladers angeordnet ist. Hierdurch wird vermieden, dass Verunreinigungen, die im Abgas mitgeführt werden, in den Verdichter gelangen und dort zu einer Beschädigung führen können. Grundsätzlich ist jedoch auch eine Ausgestaltung als Niederdruck-Abgasrückführanlage möglich, die sich dadurch charakterisiert, dass die Entnahmestelle der Abgasrückführanlage stromab der Turbine des Abgasturboladers angeordnet ist, während die Einleitstelle der Abgasrückführanlage stromauf des Verdichters des Abgasturboladers angeordnet ist. Niederdruckseitig steht ein größeres Druckgefälle zwischen Abgasanlage und Frischluftanlage zur Verfügung, was die Abgasrückführung erleichtert. Ferner erfolgt eine weitgehende Entkopplung der Abgasrückführrate vom aktuellen Ladedruck. Zudem wird durch die längere, gemeinsame Laufstrecke von der Einleitstelle bis zu den Brennräumen eine bessere Durchmischung zwischen dem rückgeführten Abgas und der Frischluft erreicht. Um bei einer Niederdruck-Abgasrückführanlage, insbesondere bei der Verwendung in einem Dieselmotor, eine Verunreinigung bzw. Beschädigung des Verdichters durch im Abgas mitgeführte Partikel zu vermeiden, kann die Entnahmestelle zweckmäßig stromab eines in der Abgasanlage angeordneten Partikelfilters angeordnet sein, das zum Entfernen von im Abgas mitgeführten Russpartikeln dient.

Partikelfilter, die in Abgasanlagen zum Einsatz kommen, enthalten in der Regel einen porösen Keramikkörper, der für die Abgasströmung durchlässig ist, jedoch nicht für die darin mitgeführten Russpartikel. Es hat sich gezeigt, dass im Betrieb der Brennkraftmaschine, insbesondere in Kraftfahrzeugen, aufgrund der auftretenden Belastungen, Vibrationen und Stöße keramische Partikel aus dem Partikelfilter gelöst und in der Abgasströmung abtransportiert werden. Diese Partikel können vergleichsweise groß sein. Ferner können sich auch Partikel aus dem zum Lagern des Keramikkörpers im Gehäuse des Partikelfilters verwendeten Lagermaterials lösen und von der Abgasströmung mitgenommen werden. Diese Partikel können über die Abgasrückführung zum Verdichter gelangen und im Verdichter zu einer Verunreinigung und insbesondere zu einer Beschädigung führen. Gefährlich ist dabei vor allem die hohe Relativgeschwindigkeit zwischen einem mit hoher Drehzahl rotierenden Verdichterrad und dem in den Verdichter eintretenden Partikeln. Desweiteren können diese Partikel auch stromab des Verdichterrads Schaden anrichten, z. Bsp. an Ladungswechselventilen oder an Kolbenführungen in den einzelnen Zylindern.

Um die Beschädigungsgefahr des Verdichters bzw. des Verdichterrads zu reduzieren, ist es grundsätzlich möglich, die Festigkeit des Verdichterrads soweit zu erhöhen, dass die Kollisionen mit den Partikeln tolerierbar sind. Die Herstellung derartig hochfester Verdichterräder ist jedoch vergleichsweise teuer.

Eine Brennkraftmaschine der eingangs genannten Art ist beispielsweise aus der EP 1 936 175 A1 bekannt. Sie ist mit einer Reinigungseinrichtung zum Entfernen von flüssigen oder festen Partikeln aus dem rückgeführten Abgas ausgestattet. Bei der bekannten Brennkraftmaschine umfasst die Reinigungseinrichtung einen kegelförmigen Filterkörper, der zwischen zwei Flanschen eingespannt ist, mit denen er an einem Gehäuse eines Abgasrückführventils montierbar ist. Dabei sind die Flansche der Reinigungseinrichtung zwischen zwei Flanschen eingebunden, mit denen eine Rückführleitung an das Gehäuse des Abgasrückführventils angeflanscht ist.

Weitere Brennkraftmaschinen, bei denen rückgeführtes Abgas mit Hilfe einer entsprechenden Reinigungseinrichtung gereinigt wird, sind beispielsweise aus der DE 10 2006 038 706 A1, aus der DE 697 32 534 T2, aus der DE 10 2006 023 589 A1 und aus der DE 101 13 449 A1 bekannt.

Eine gattungsgemäße Brennkraftmaschine ist aus der DE 38 33 957 A1 bekannt. Die 2007/079138 A2 beschreibt ein Filterelement mit Flansch, welches im Bereich eines Gehäuseflansches eingesetzt ist.

Die vorliegende Erfindung beschäftigt sich mit dem Problem, für eine Brennkraftmaschine der eingangs genannten Art eine verbesserte Ausführungsform anzugeben, die sich insbesondere durch einen reduzierten Druckabfall bei der Durchströmung der Reinigungseinrichtung auszeichnet.

Dieses Problem wird durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Partikel aus dem Abgas mit Hilfe einer entsprechenden Reinigungseinrichtung zu entfernen. Bei entfernten flüssigen oder festen Partikeln aus dem rückgeführten Abgas kann die Gefahr einer Beschädigung von angeströmten bzw. durchströmten Komponenten der Abgasrückführanlage bzw. der Frischluftanlage signifikant reduziert werden. Diese Reinigungseinrichtung muss für die anfallenden Temperaturen geeignet sein und muss hinsichtlich der Partikelgröße auf die aus dem Abgas zu entfernenden kritischen Partikel abgestimmt sein.

Die Reinigungseinrichtung ist dabei als Filtereinrichtung ausgestaltet, die einen durchströmbaren, für Abgas durchlässigen und für die zu entfernenden Partikel undurchlässigen Filterkörper aufweist. Derartige Filtereinrichtungen zeichnen sich durch eine extrem hohe Reinigungswirkung aus. Des Weiteren ist es möglich, eine Filtereinrichtung mit einem vergleichsweise niedrigen Durchströmungswiderstand auszustatten. Dies ist bei der vorliegenden Anwendung von besonderem Vorteil, da in der Regel nur ein relativ geringes Druckgefälle zwischen Abgasanlage und Frischluftanlage zur Verfügung steht, um das Abgas rückzuführen.

Erfindungsgemäß ist der Filterkörper zylindrisch ausgestaltet, wobei im Filtergehäuse eine den Filterkörper koaxial umschließende Ringkammer ausgebildet ist. Diese Bauweise führt zu einer vergleichsweise großen durchströmbaren Filterfläche, was den Durchströmungswiderstand der Reinigungseinrichtung reduziert. Insbesondere vermeidet die Ringkammer einen Druckanstieg, da sie im jeweiligen Gaspfad insbesondere eine Vergrößerung des durchströmbaren Querschnitts bewirkt, der bei fehlendem Filterkörper zu einem Druckabfall führen würde. Dieser Druckabfall wird hier zur Kompensation des durch den Strömungswiderstand des Filterkörpers erzeugten Druckanstiegs benutzt.

Außerdem ist das Filtergehäuse bei der erfindungsgemäßen Filtereinrichtung mit zwei Gehäuseflanschen ausgestattet, mit denen das Filtergehäuse im Einbauzustand zum Austauschen des Filterkörpers mit dazu komplementären Gegenflanschen der jeweiligen gasführenden Leitung, insbesondere der Abgasanlage und/oder einer Abgasrückführanlage und/oder der Frischluftanlage, lösbar verbunden ist. Durch die beiden Flansche kann das Filtergehäuse einfach in eine entsprechende gasführende Leitung eingebunden werden. Durch Lösen der Flanschverbindungen kann das Filtergehäuse aus der jeweiligen gasführenden Leitung herausgenommen werden, um beispielsweise den Filterkörper auszutauschen.

Entsprechend einer vorteilhaften Ausführungsform ist die Reinigungseinrichtung in der Abgasrückführanlage angeordnet, wodurch in jedem Fall sämtliche Komponenten der Frischluftanlage vor einer Partikelbeaufschlagung geschützt sind. Da der Volumenstrom des rückgeführten Abgases relativ klein ist, kann die Reinigungseinrichtung bei dieser Ausgestaltung ebenfalls kompakt bauen und mit einem relativ niedrigen Druckverlust arbeiten. Ebenso ist es denkbar, die Reinigungseinrichtung in der Frischluftanlage anzuordnen, z. Bsp. stromauf der jeweils zu schützenden Komponente, oder in der Abgasanlage zwischen einem Partikelfilter und der Entnahmestelle.

Alternativ sind grundsätzlich auch andere Reinigungseinrichtungen verwendbar, wie z. Bsp. ein Trägheitsabscheider, wie z. Bsp. ein Zyklon oder eine Zentrifuge oder ein Impaktor.

Als Filtermaterial für den Filterkörper der Filtereinrichtung eignen sich insbesondere bei einer Anordnung in der Abgasrückführanlage, bspw. metallische Filtermaterialien, wie z. Bsp. ein Drahtgestrick oder ein Drahtgewebe oder ein Drahtgewirk. Derartige metallische Filtermaterialien besitzen eine hinreichende Temperaturfestigkeit. Desweiteren zeichnen sich Drahtgewebe und Drahtgestricke durch eine vergleichsweise hohe Filterwirkung bei relativ niedrigem Durchströmungswiderstand aus.

Erfindungsgemäß weist der Filterkörper einen Flanschabschnitt auf, der zur Positionierung bzw. Fixierung des Filterkörpers in einem Filtergehäuse im montierten Zustand zwischen aneinander befestigten Flanschen des Filtergehäuses und der Abgasrückführanlage bzw. der Frischluftanlage angeordnet ist. Zusätzliche Positionierungselemente oder Fixierelemente können somit entfallen. Der Filterkörper kann somit beim Einbau des Filtergehäuses in die Abgasrückführanlage bzw. in die Frischluftanlage zwangsläufig automatisch positioniert und fixiert werden. Hierdurch wird der Einbau und insbesondere ein Wechsel des Filterkörpers vereinfacht.

Um die beiden miteinander zusammenwirkenden Flansche des Filtergehäuses einerseits und der Frischluftanlage bzw. der Abgasrückführanlage andererseits gasdicht miteinander zu verbinden, kann zwischen den Flanschen eine entsprechende Dichtung angeordnet sein. Diese Dichtung kann entsprechend einer vorteilhaften Ausführungsform integral am Flanschabschnitt des Filterkörpers ausgebildet sein. Durch diese Bauweise wird erreicht, dass beim Wechseln des Filterkörpers gleichzeitig auch die Dichtung gewechselt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine,
- Fig. 2: einen vereinfachten Längsschnitt durch eine als Filtereinrichtung ausgestaltete Reinigungseinrichtung mit eingesetztem Filterkörper,
- Fig. 3: eine Schnittansicht wie in Fig. 2, jedoch ohne den Filterkörper,
- Fig. 4: eine perspektivische Ansicht des Filterkörpers,
- Fig. 5: eine perspektivische, auseinander gezogene und teilweise geschnittene Darstellung des Filterkörpers,
- Fig. 6: eine perspektivische Ansicht der als Filtereinrichtung ausgestalteten Reinigungseinrichtung.

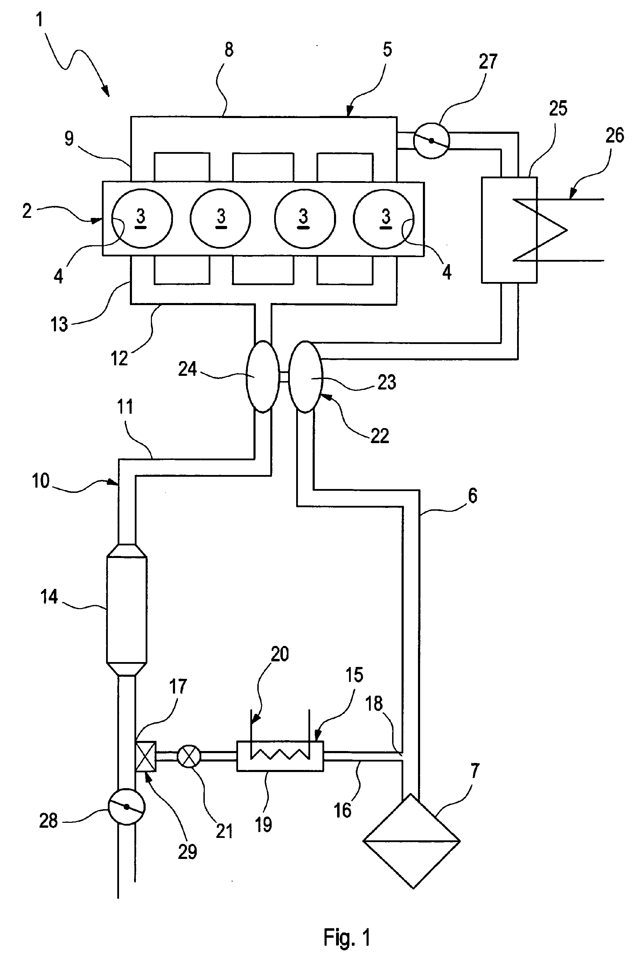

Entsprechend Fig. 1 umfasst eine Brennkraftmaschine 1, die in einem Kraftfahrzeug angeordnet sein kann, einen Motorblock 2, der mehrere Brennräume 3 enthält. Im Beispiel sind ohne Beschränkung der Allgemeinheit vier Brennräume gezeigt. Die Brennräume 3 befinden sich jeweils in einem Zylinder 4, in dem ein nicht gezeigter Kolben hubverstellbar angeordnet ist. Insoweit handelt es sich bei der Brennkraftmaschine 1 um einen Kolbenmotor, der als Dieselmotor oder als Benzinmotor ausgestaltet sein kann. Gezeigt ist ein Reihenmotor. Ebenso ist ein V-Motor oder ein Boxermotor denkbar. Die Brennkraftmaschine 1 weist eine Frischluftanlage 5 auf, über die Frischluft zu den Brennräumen 3 gelangt. Die Frischluftanlage 5 weist im Beispiel eine Frischluftleitung 6 auf, in der ein Luftfilter 7 angeordnet ist und die zu einem Frischluftverteiler 8 führt, der die Frischluft über Einzelrohre 9 den einzelnen Brennräumen 3 zuführt. Ferner weist die Brennkraftmaschine 1 eine Abgasanlage 10 auf, über die Abgas von den Brennräumen 3 abgeführt wird. Die Abgasanlage 10 weist z. Bsp. eine Abgasleitung 11 auf, die von einem Abgassammler 12 abgeht, der seinerseits über Einzelrohre 13 an die Brennräume 3 angeschlossen ist. Der Abgasanlage 10 kann ein Partikelfilter 14 enthalten, das in der Abgasleitung 11 angeordnet ist. Darüber hinaus kann die Abgasanlage 4 weitere Abgasreinigungseinrichtungen, wie z. Bsp. einen SCR-Katalysator, der üblicherweise stromab des Partikelfilters 14 angeordnet ist, sowie einen Oxydationskatalysator aufweisen, der üblicherweise stromauf des Partikelfilters 14 angeordnet ist. Das Partikelfilter 14 ist zweckmäßig stromab der Turbine 24 angeordnet, so dass der Turbine 24 möglichst viel Abgasenthalpie zur Verfügung steht. Darüber hinaus können Schalldämpfereinrichtungen vorhanden sein.

Die Brennkraftmaschine 1 ist außerdem mit einer Abgasrückführanlage 15 ausgestattet, die im Folgenden auch als AGR-Anlage 15 bezeichnet wird. Sie dient zum Rückführen von Abgas von der Abgasanlage 10 zur Frischluftanlage 5. Hierzu weist die AGR-Anlage 15 eine Abgasrückführleitung 16 auf die im Folgenden auch als AGR-Leitung 16 bezeichnet wird. Die AGR-Leitung 16 ist über eine Entnahmestelle 17 an die Abgasanlage 10 bzw. an deren Abgasleitung 11 angeschlossen und über eine Einleitstelle 18 an die Frischluftanlage 5 bzw. an deren Frischluftleitung 6 angeschlossen. Die Entnahmestelle 17 ist dabei stromab des Partikelfilters 14 positioniert. Die Einleitstelle 18 ist dabei stromab des Luftfilters 7 positioniert. Die AGR-Anlage 15 enthält in der AGR-Leitung 16 einen Abgasrückführkühler 19, der im Folgenden auch als AGR-Kühler 19 bezeichnet wird. Der AGR-Kühler 19 kann bspw. an einen Kühlkreis 20 angeschlossen sein, der seinerseits mit einem Kühlkreis der Brennkraftmaschine 1 zum Kühlen des Motorblocks 2 wärmeübertragend gekoppelt sein kann oder einen Bestandteil davon bilden kann. Ferner weist die AGR-Anlage 15 ein Abgasrückführventil 21 auf, das auch als AGR-Ventil 21 bezeichnet werden kann. Im Beispiel ist das AGR-Ventil 21 in der AGR-Leitung 16 stromauf des AGR-Kühlers 19 angeordnet. Ebenso ist es möglich, das AGR-Ventil 21 stromab des AGR-Kühlers 19 in der AGR-Leitung 16 anzuordnen. Auch kann das AGR-Ventil 21 eingangsseitig oder ausgangsseitig in den AGR-Kühler 19 integriert werden.

Die hier gezeigte Brennkraftmaschine 1 ist aufgeladen. Dass heißt, sie besitzt eine Ladeeinrichtung 22, mit deren Hilfe das Druckniveau in der Frischluft, die über die Frischluftanlage 4 den Brennräumen 3 zugeführt wird, erhöht werden kann. Hierdurch kann der Massenstrom und somit die Leistungsdichte der Brennkraftmaschine 1 erhöht werden. Im gezeigten Beispiel ist die Ladeeinrichtung als Abgasturbolader 22 ausgestaltet, der einen in der Frischluftanlage 5 bzw. in deren Frischluftleitung 6 angeordneten Verdichter 23 und eine damit antriebsverbundene Turbine 24 aufweist, die in der Abgasanlage 10 bzw. in deren Abgasleitung 11 angeordnet ist. In der Frischluftanlage 5 bzw. in deren Frischluftleitung 6 kann stromab des Verdichters 23 optional ein Ladeluftkühler 25 angeordnet sein. Dieser ist bevorzugt an einen Kühlkreis 26 angeschlossen, der seinerseits zum Beispiel mit dem zuvor genannten Kühlkreis der Brennkraftmaschine 1 zum Kühlen des Motorblocks 2 wärmeübertragend gekoppelt sein kann oder einen Bestandteil davon bilden kann. Im Beispiel ist außerdem rein exemplarisch eine Drosselklappe 27 dargestellt, die in der Frischluftanlage 5 z. Bsp. in der Frischluftleitung 6 angeordnet ist, und zwar stromab des Ladeluftkühlers 25 und stromauf des Frischluftverteilers 8. Ebenso kann die Drossel 27 eingangsseitig in den Frischluftverteiler 8 integriert sein. Desweiteren ist grundsätzlich auch eine drosselfreie Ausgestaltung der Frischluftanlage 5 denkbar.

Die Abgasanlage 10 weist im Beispiel optional eine Abgasdrossel 28 auf, die in der Abgasleitung 11 stromab der Entnahmestelle 17 angeordnet ist. Mit Hilfe der Abgasdrossel 28 kann bei Bedarf der Druck im Abgas stromauf der Abgasdrossel 28 erhöht werden, um die Druckdifferenz zwischen Entnahmestelle 17 und Einleitstelle 18 zu vergrößern. Diese Druckdifferenz treibt das rückgeführte Abgas an. Je nach Betriebszustand der Brennkraftmaschine 1 kann es erforderlich sein, mit Hilfe der Abgasdrossel 28 einen gewissen Staudruck zu erzeugen, um eine gewünschte Abgasrückführrate oder kurz AGR-Rate einstellen zu können.

Die Brennkraftmaschine 1 ist außerdem mit einer Reinigungseinrichtung 29 ausgestattet, mit deren Hilfe flüssige oder feste Partikel aus dem rückgeführten Abgas entfernt werden können. Unter dem Begriff "rückgeführtes Abgas" wird im vorliegenden Zusammenhang Abgas verstanden, das sich bereits in der Abgasrückführanlage 15 befindet, sich also nicht mehr in der Abgasanlage 10 befindet. Sobald das Abgas von der Abgasleitung 11 über die Entnahmestelle 17 aus der Abgasanlage 10 austritt, zählt es zum rückgeführten Abgas. Es kann sich aber auch schon in der Frischluftanlage 5 befinden in Form eines Gemischs aus Frischluft und rückgkeführtem Abgas. Die Reinigungseinrichtung 29 ist im gezeigten Beispiel in der AGR-Anlage 15 angeordnet, und zwar in deren AGR-Leitung 16. Ferner ist die Reinigungseinrichtung 29 im Beispiel der Fig. 1 unmittelbar an der Entnahmestelle 17, also eingangsseitig der AGR-Leitung 16 angeordnet. Im Beispiel befindet sich die Reinigungseinrichtung 29 in der AGR-Leitung 16 stromauf des AGR-Kühlers 19 und auch stromauf des AGR-Ventils 21.

Die Reinigungseinrichtung 29 kann alternativ auch in der Frischluftanlage 5 bzw. in deren Frischluftleitung 6 angeordnet sein, und zwar stromauf des Verdichters 23 und stromab der Einleitstelle 18. Durch die Anordnung der Reinigungseinrichtung 29 in der Frischluftanlage 5 können bspw. auch Kondensattröpfchen aus der Strömung entfernt werden, die durch ein Gemisch aus Frischgas und rückgeführtem Abgas gebildet ist. Derartige Kondensattröpfchen können in der Frischluftanlage 5 anfallen und stellen ebenfalls ein Beschädigungspotenzial z. Bsp. für den Verdichter 23 dar.

Bei einer anderen Ausführungsform kann alternativ vorgesehen sein, die Reinigungseinrichtung 29 dem gesamten Abgasstrom auszusetzen, also zum Entfernen von flüssigen oder festen Partikeln aus dem Abgas auszugestalten. Hierzu wird die Reinigungseinrichtung 29 stromab des Partikelfilters 14 und stromauf der Entnahmestelle 17 in die Abgasleitung 11 eingebaut. Auf diese Weise wird ebenfalls erreicht, dass keine Partikel durch die Abgasrückführung z.B. zum Verdichter 23 gelangen.

Die Reinigungseinrichtung 29 ist insbesondere so ausgelegt, dass die damit erzielbare Reinigungswirkung, insbesondere um eine Größenordnung, schlechter ist als die Reinigungswirkung des Partikelfilters 14. Hierdurch wird erreicht, dass die Reinigungseinrichtung 29 einen vergleichsweise geringen Durchströmungswiderstand besitzt. Gleichzeitig wird dem Umstand Rechnung getragen, dass die Reinigungseinrichtung 29 nicht die Aufgabe des Partikelfilters 14 übernehmen soll, sondern vielmehr Partikel, die sich im Betrieb aus dem Filtermaterial des Partikelfilters 14 lösen, aus dem Abgas zu entfernen.

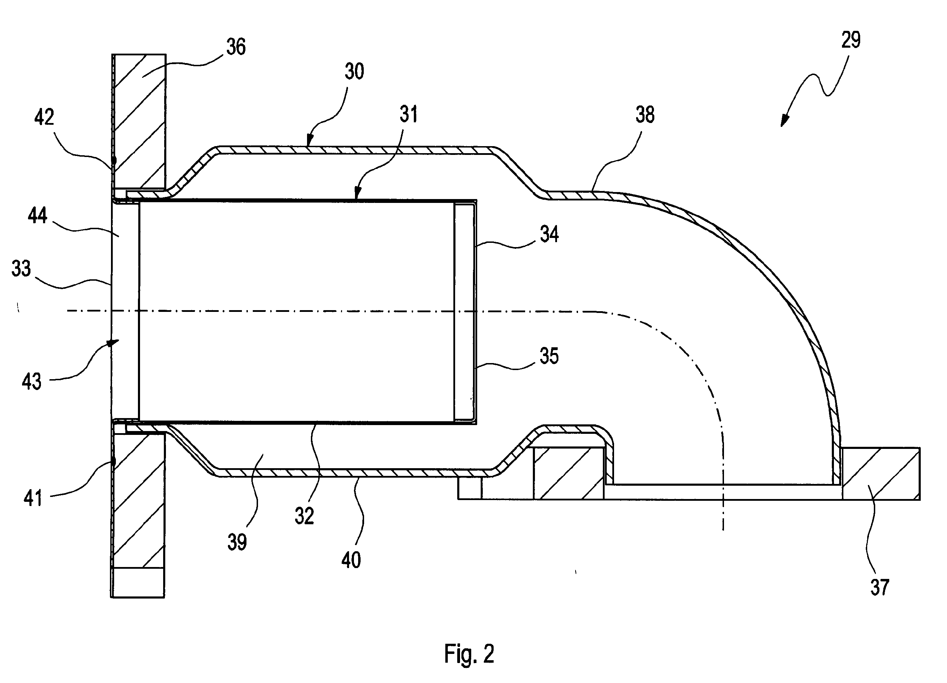

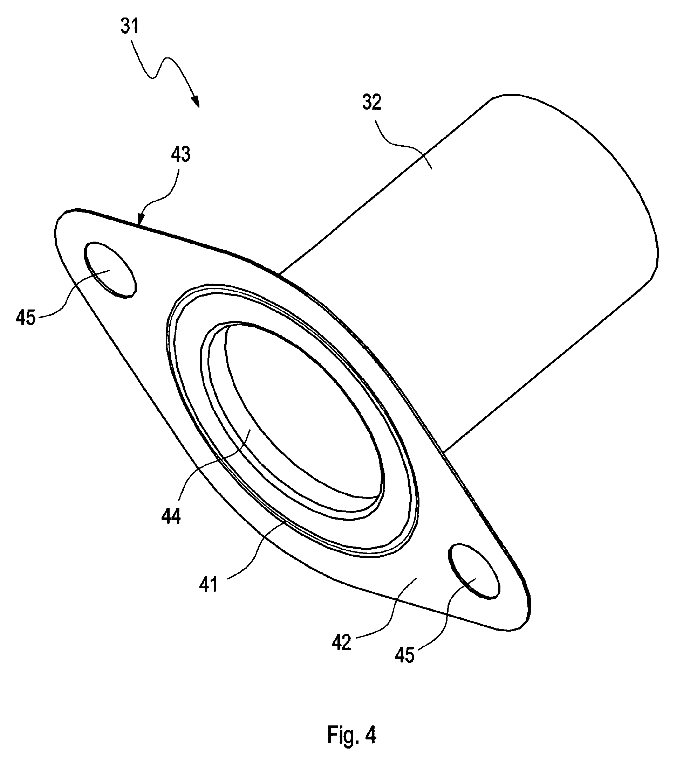

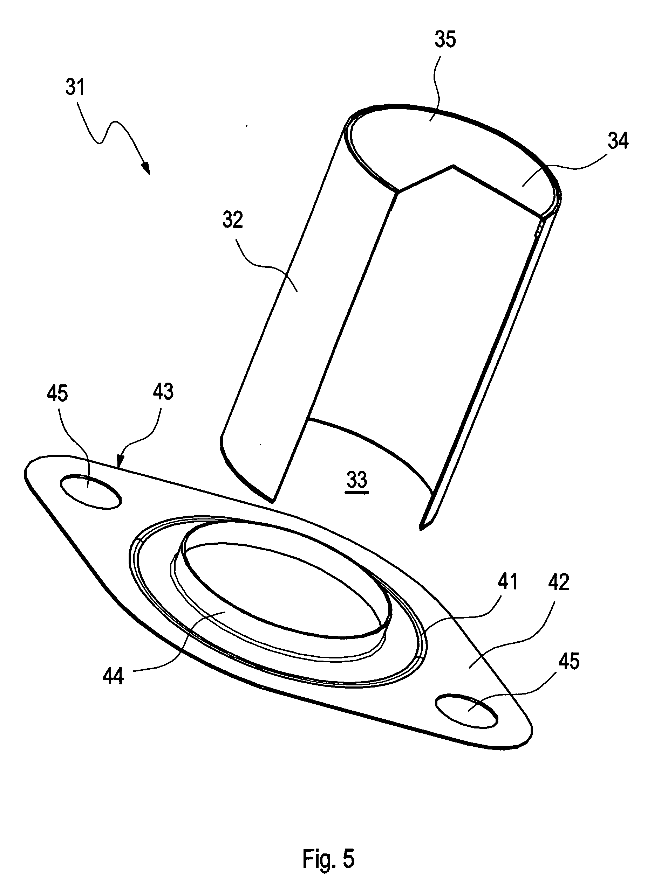

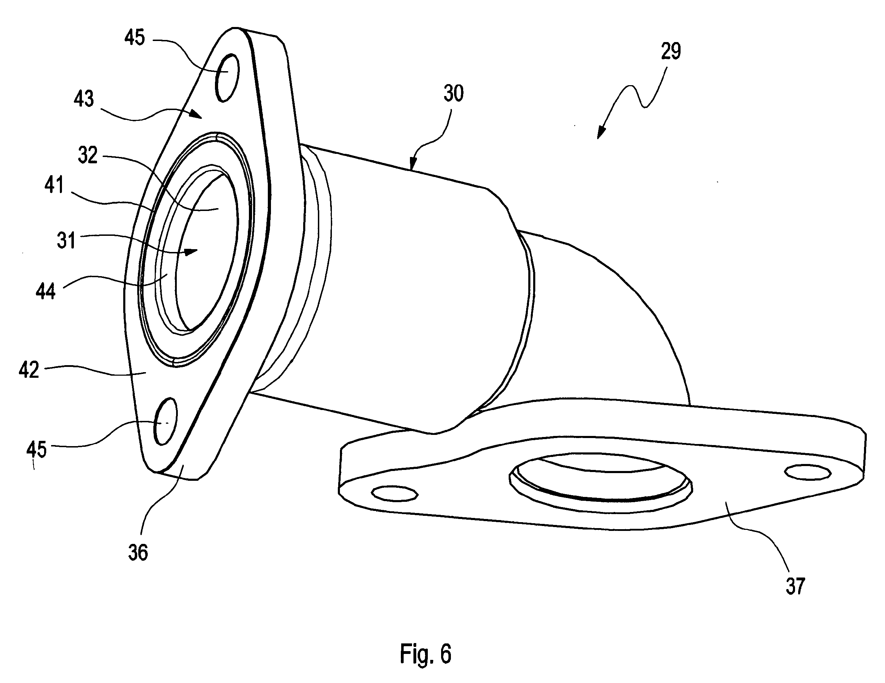

Grundsätzlich kann die Reinigungseinrichtung 29 beliebig ausgestaltet sein. Bevorzugt sind jedoch solche Ausführungsformen, bei denen eine effektive Abgasreinigung bei einem möglichst kleinen Druckverlust realisiert werden kann. Bevorzugt wird daher eine Ausführungsform, bei welcher die Reinigungseinrichtung 29 als Filtereinrichtung ausgestaltet ist, die im Folgenden ebenfalls mit 29 bezeichnet wird. Eine bevorzugte Ausführungsform einer solchen Filtereinrichtung 29 wird im Folgenden anhand der Fig. 2 bis 6 näher erläutert.

Entsprechend den Fig. 2 bis 6 umfasst eine solche Filtereinrichtung 29 ein Filtergehäuse 30 und einen darin angeordneten Filterkörper 31. Der Filterkörper 31 ist durchströmbar und ist hierzu im Filtergehäuse 30 so angeordnet, dass er vom Abgas zwangsläufig durchströmt wird. Der Filterkörper 31 ist abgasdurchlässig ausgestaltet, während er für die aus dem Abgas zu entfernenden flüssigen oder festen Partikel undurchlässig ist. Beispielsweise ist der Filterkörper 31 bzw. sein Filtermaterial 32 so ausgestaltet, dass er Partikel aus dem Abgas herausfiltert, deren Korngröße einen vorbestimmten Grenzwert übersteigt. Beispielsweise kann dieser Grenzwert so gewählt sein, dass Partikel, deren Korngröße größer als 100 µm oder größer als 150 µm oder größer als 200 µm oder größer als 250 µm oder größer als 300 µm ist, herausgefiltert werden.

Das hierzu verwendete Filtermaterial 32 kann bspw. ein Gestrick oder ein Gewirk oder ein Gewebe sein. Bevorzugt werden geordnete Strukturen, wie ein Gewebe oder ein Gestrick, mit deren Hilfe eine gezielte Reinigungswirkung im Hinblick auf eine bestimmte Korngröße der herauszufilternden Partikel sowie ein möglichst geringer Durchströmungswiderstand realisierbar sind. Amorphe Strukturen, wie z. Bsp. ein Gewirk, sind jedoch grundsätzlich auch denkbar. Sofern die Filtereinrichtung 29 stromauf des AGR-Kühlers 19 zum Einsatz kommt, empfiehlt es sich, das Filtermaterial entsprechend hitzebeständig auszugestalten. Bevorzugt besteht es daher aus einem metallischen Werkstoff.
Dementsprechend sind die Drähte in einem Drahtgewebe, Drahtgewirk oder Drahtgestrick des Filtermaterials 32 bevorzugt Metalldrähte. Sofern die Filtereinrichtung 29 stromab des AGR-Kühlers 19 verwendet wird, können auch andere Materialien mit geringerer Temperaturfestigkeit verwendet werden, wie z.B. Kunststoffe. Insbesondere lassen sich dann auch andere herkömmliche Filtermaterialien verwenden, wie z. Bsp. Vliesfilter oder Papierfilter.

Im gezeigten Beispiel der Fig. 2 bis 6 ist der Filterkörper 31 bzw. sein Filtermaterial 32 ringförmig oder hohlzylindrisch ausgestaltet. Dementsprechend bildet das Filtermaterial 32 einen Mantelkörper. Der Filterkörper 31 ist hier an einer Axialseite 33 offen ausgestaltet. An der gegenüberliegenden Axialseite 34 ist der Filterkörper 31 im gezeigten Beispiel durch einen Boden 35 verschlossen. Der Boden 35 kann gasundurchlässig ausgestaltet sein. Dann besteht er insbesondere nicht aus dem Filtermaterial 32. Ebenso ist es möglich, auch den Boden 35 aus dem Filtermaterial 32 herzustellen, so dass er ebenfalls vom Abgas durchströmbar ist und zur Vergrößerung der Filterfläche beiträgt. Der Boden 35 kann mit dem Mantelkörper integral aus einem Stück geformt sein, oder - wie in gezeigtem Beispiel - an den Mantelkörper angebaut sein, wie z.B. durch Verlöten oder Verschweißen. Im gezeigten Beispiel ist der Filterkörper 31 bzw. sein Filtermaterial 32 topfförmig ausgestaltet. Die hier vorgestellte Formgebung lässt sich vergleichsweise einfach herstellen. Es ist jedoch klar, dass grundsätzlich auch andere Formen realisierbar sind, wie z. Bsp. eine ballige Form oder Kugelform.

Entsprechend den Fig. 2, 3 und 6 weist das Gehäuse 30 zumindest einen Gehäuseflansch 36 auf. Im Beispiel besitzt das Gehäuse 30 zwei Gehäuseflansche 36 und 37. Mit dem jeweiligen Gehäuseflansch 36, 37 kann das Filtergehäuse 30 im Einbauzustand an dazu komplementären Gegenflanschen lösbar befestigt werden, bspw. mittels entsprechender Verschraubungen. Besagte Gegenflansche können bspw. an der Abgasanlage 10 und/oder an der Abgasrückführanlage 15 und/oder an der Frischluftanlage 5 ausgebildet sein, je nach Einbauort der Filtereinrichtung 29. Im Beispiel umfasst das Filtergehäuse 30 einen Rohrkörper 38, in dem die Abgasführung stattfindet. Der Rohrkörper 38 kann im Bereich des darin eingesetzten Filterkörpers 31 einen aufgeweiteten Querschnitt besitzen, um eine den Filterkörper 31 koaxial umschließende Ringkammer 39 auszubilden. Die mit 40 bezeichnete Querschnittserweiterung des Rohrkörpers 38 ermöglicht es, für den Filterkörper 31 einen möglichst großen Querschnitt zu verwenden, um die zum Filtern bereitstehende Filterfläche zu vergrößern. Je größer die Filterfläche ist, desto geringer ist bei gleichem Filtrationsgrad der Durchströmungswiderstand des Filterkörpers 31. Um die zur Verfügung stehende Filterfläche weiter zu vergrößern bzw. um den Durchströmungswiderstand des Filterkörpers 31 weiter zu reduzieren, ist es grundsätzlich auch möglich, das Filtermaterial 32 in der Umfangsrichtung wellenförmig oder zick-zack-förmig oder sternförmig anzuordnen. Hierdurch kann gegenüber der einfachen Mantelfläche die zur Verfügung stehende Filterfläche vervielfacht werden.

Im Beispiel sind die beiden Gehäuseflansche 36, 37 bezüglich des Rohrkörpers 38 separat hergestellt und auf geeignete Weise an den Rohrkörper 38 angebaut. Insbesondere sind die Flansche 36, 37 mit dem Rohrkörper 38 verschweißt oder verlötet. Ebenso ist auch eine integrale Bauweise denkbar, bei welcher der Rohrkörper 38 mit daran ausgeformten Gehäuseflanschen 36, 37 integral aus einem Stück hergestellt ist.

Im montierten Zustand kann zwischen den aneinander befestigten Flanschen, also zwischen dem jeweiligen Gehäuseflansch 36, 37 und dem dazu komplementären, hier nicht gezeigten Gegenflansch, eine Dichtung vorgesehen sein. Eine derartige Dichtung ist in den Fig. 2 und 4 bis 6 mit 41 bezeichnet. Sie wirkt axial und ist zwischen den axial miteinander verspannten bzw. verschraubten Flanschen axial eingespannt.

Entsprechend den Fig. 2 und 4 bis 6 kann der Filterkörper 31 bei einer bevorzugten Ausführungsform einen Flanschabschnitt 42 aufweisen. Dieser Flanschabschnitt 42 kann integral am übrigen Filterkörper 31 ausgeformt sein. Ebenso ist eine mehrteilige Bauweise denkbar. Beim gezeigten Beispiel ist der Flanschabschnitt 42 an einem Flanschkörper 43 ausgebildet, der separat vom Filtermaterial 32 hergestellt ist. Der Flanschkörper 43 weist bspw. einen axial abstehenden, ringförmig umlaufenden Kragen 44 auf, auf den der übrige Filterkörper 31, also das Filtermaterial 32 bzw. der damit gebildete Zylinderkörper axial aufgesteckt wird. Ebenso kann der Kragen 44 auf den Zylinderkörper bzw. auf das Filtermaterial 32 aufgesteckt werden. Im Bereich dieses Kragens 44 können der Flanschkörper 43 und das Filtermaterial 32 auf geeignete Weise aneinander befestigt werden. Beispielsweise durch Verlöten, Verschweißen, insbesondere Punktschweißen.

Im gezeigten, bevorzugten Beispiel besitzt der Flanschabschnitt 42 bzw. der Flanschkörper 43 eine komplementär zum zugehörigen Gehäuseflansch 36 geformte Kontur. Auf diese Weise lässt sich der Flanschabschnitt 42 besonders einfach in die Flanschverbindung des jeweiligen Gehäuseflansches 36 und des damit verbundenen Gegenflansches einbinden. Dementsprechend ist besagter Flanschabschnitt 42 im montierten Zustand zwischen den aneinander befestigten Flanschen angeordnet. Im Beispiel ist der Flanschabschnitt 42 somit zwischen dem Gehäuseflansch 36 und dem zugehörigen Gegenflansch angeordnet und dazwischen axial verspannt. Auf diese Weise kann der mit dem Flanschabschnitt 42 verbundene übrige Filterkörper 31 im Filtergehäuse 30 in vorbestimmter Weise positioniert und relativ dazu fixiert werden.

Bei der hier gezeigten, besonders vorteilhaften Ausführungsform ist die zuvor angesprochene Dichtung 41 in den Flanschabschnitt 42 integriert. Die Dichtung 41 kann bspw. durch eine ringförmig umlaufende Sicke oder Erhebung gebildet sein, die an einer Seite des Flanschabschnitts 42 absteht.

Je nach Einbauort der Filtereinrichtung 29 ist der Flanschabschnitt 42 bzw. der Flanschkörper 43 aus einem Metall oder aber aus Kunststoff hergestellt. Entsprechendes gilt auch für die Dichtung 41. Beispielsweise handelt es sich beim Flanschkörper 43 um ein Blechformteil, das integral mit dem Ringkragen 44 und der Dichtung 41 sowie mit Öffnungen 45 aus einem einzigen Blechstück hergestellt werden kann. Die Öffnungen 45 dienen zum Durchführen von Verschraubungen, mit denen der Gehäuseflansch 36 mit dem zugehörigen Gegenflansch verschraubt wird.

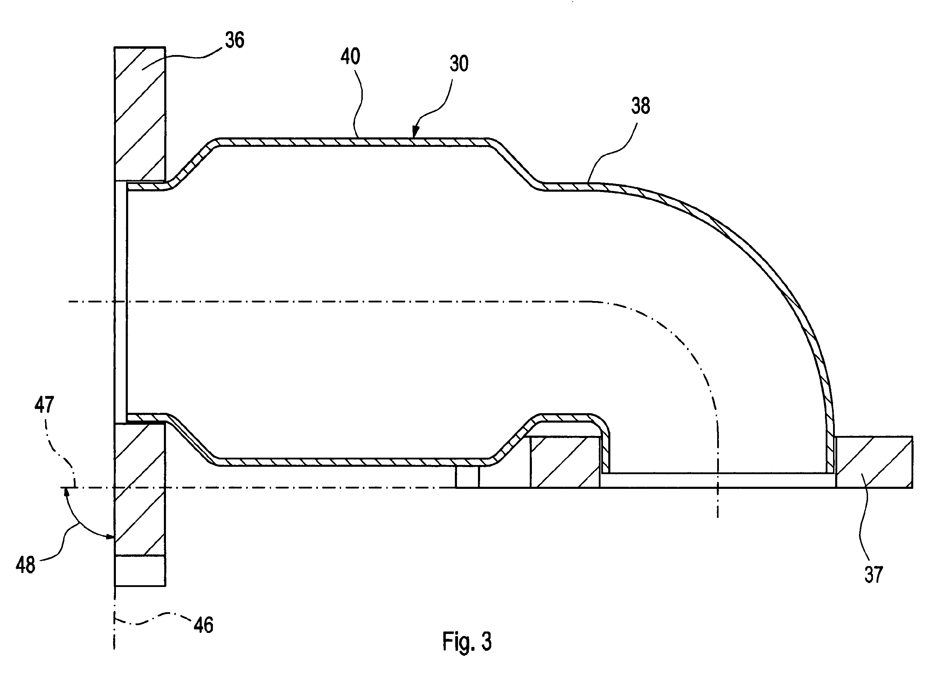

Entsprechend Fig. 3 liegen die beiden Flansche 36, 37 jeweils in einer Flanschebene 46, 47. Im gezeigten Beispiel erstrecken sich die beiden Flanschebenen 46, 47 zueinander geneigt. Insbesondere können die beiden Flanschebenen 46, 47 senkrecht aufeinander stehen, also einen Winkel 48 von 90° zwischen sich einschließen.

## Patentansprüche

1. Brennkraftmaschine, insbesondere in einem Kraftfahrzeug,
- mit einem Motorblock (2), der mehrere Brennräume (3) enthält,
- mit einer Frischluftanlage (5) zum Zuführen von Frischluft zu den Brennräumen (3),
- mit einer Abgasanlage (10) zum Abführen von Abgas von den Brennräumen (3),
- eine Reinigungseinrichtung (29) zum Entfernen von flüssigen oder festen Partikeln aus dem rückgeführten Abgas,
- wobei die Reinigungseinrichtung als Filtereinrichtung (29) ausgestaltet ist, die einen für Abgas durchlässigen und für die zu entfernenden Partikel undurchlässigen Filterkörper (31) aufweist,
- wobei der Filterkörper (31) zylindrisch ausgestaltet ist,
- wobei die Filtereinrichtung (29) ein Filtergehäuse (30) aufweist, in welches der Filterkörper (31) eingesetzt ist,
- wobei das Filtergehäuse (30) zwei Gehäuseflansche (36, 37) aufweist, mit denen das Filtergehäuse (30) im Einbauzustand zum Austauschen des Filterkörpers (31) mit dazu komplementären Gegenflanschen der jeweiligen gasführenden Leitung, insbesondere der Abgasanlage (10) und/oder einer Abgasrückführanlage (15) und/oder der Frischluftanlage (5), lösbar verbunden ist,
- wobei im Filtergehäuse (30) eine den Filterkörper (31) koaxial umschließende Ringkammer (39) ausgebildet ist,
**dadurch gekennzeichnet,**
**dass** der Filterkörper (31) einen Flanschabschnitt (42) aufweist, der im Einbauzustand zur Positionierung und/oder Fixierung des Filterkörpers (31) im Filtergehäuse (30) zwischen dem jeweiligen Gehäuseflansch (36, 37) und dem jeweiligen damit verbundenen Gegenflansch angeordnet ist.

2. Brennkraftmaschine nach Anspruch 1,
**dadurch gekennzeichnet,**
**dass** die Reinigungseinrichtung (29) in einer Abgasrückführanlage (15) zum Rückführen von Abgas von der Abgasanlage (10) zur Frischluftanlage (5) angeordnet ist oder in der Frischluftanlage (5) stromab einer Einleitstelle (18) angeordnet ist, an welcher die Abgasrückführanlage (15) an die Frischluftanlage (5) angeschlossen ist.

3. Brennkraftmaschine nach Anspruch 2,
**dadurch gekennzeichnet,**
**dass** die Abgasrückführanlage (15) bei einer aufgeladenen Brennkraftmaschine (1) als Niederdruck-Abgasrückführanlage (15) ausgestaltet ist.

4. Brennkraftmaschine nach einem der Ansprüche 1 bis 3,
**dadurch gekennzeichnet,**
**dass** die Reinigungseinrichtung (29) stromauf einer in der Frischluftanlage (5) angeordneten Ladeeinrichtung (22) angeordnet ist.

5. Brennkraftmaschine nach einem der Ansprüche 1 bis 4,
**dadurch gekennzeichnet,**
**dass** die Reinigungseinrichtung (29) stromauf eines in einer Abgasrückführanlage (15) angeordneten Abgasrückführkühlers (19) angeordnet ist.

6. Brennkraftmaschine nach einem der Ansprüche 1 bis 5,
**dadurch gekennzeichnet,**
**dass** die Reinigungseinrichtung (29) stromauf eines in einer Abgasrückführanlage (15) angeordneten Abgasrückführventils (21) angeordnet ist.

7. Brennkraftmaschine nach einem der Ansprüche 1 bis 6,
**dadurch gekennzeichnet,**
**dass** der Filterkörper (31) als Filtermaterial (32) ein Gestrick oder Drahtgestrick oder ein Gewirk oder Drahtgewirk oder ein Gewebe oder Drahtgewebe aufweist, wobei das Filtermaterial insbesondere aus einem metallischen Werkstoff besteht.

8. Brennkraftmaschine nach einem der Ansprüche 1 bis 7,
**dadurch gekennzeichnet,**
**dass** der Filterkörper (31) topfförmig ausgestaltet ist.

9. Brennkraftmaschine nach einem der Ansprüche 1 bis 8,
**dadurch gekennzeichnet,**
**dass** eine Dichtung (41) vorgesehen ist, die im montierten Zustand zwischen den aneinander befestigten Flanschen (36, 37) angeordnet ist.

10. Brennkraftmaschine nach Anspruch 9,
**dadurch gekennzeichnet,**
**dass** die Dichtung (41) integral am Flanschabschnitt (42) ausgestaltet ist.

11. Brennkraftmaschine nach einem der Ansprüche 1 bis 10,
**dadurch gekennzeichnet,**
**dass** das Filtergehäuse (30) aus einem Stück hergestellt ist oder einen Rohrkörper (38) und einen oder zwei daran angebaute Gehäuseflansche (36, 37) aufweist.

12. Brennkraftmaschine nach einem der Ansprüche 1 bis 11,
**dadurch gekennzeichnet,**
**dass** die beiden Gehäuseflansche (36,37) jeweils in einer Flanschebene (46, 47) liegen, wobei die beiden Flanschebenen (46, 47) zueinander geneigt sind, insbesondere um etwa 90°.

13. Brennkraftmaschine nach einem der Ansprüche 1 bis 12,
**dadurch gekennzeichnet,**
**dass** die Reinigungseinrichtung (29) in der Abgasanlage (10) stromab eines Partikelfilters (14) angeordnet ist.

## Claims

1. An internal combustion engine, in particular in a motor vehicle,
- with an engine block (2) that contains a plurality of combustion chambers (3),
- with a fresh-air arrangement (5) for supplying fresh air to the combustion chambers (3),
- with an exhaust-gas arrangement (10) for discharging the exhaust gas from the combustion chambers (3),
- with a purification device (29) for removing liquid or solid particles from the recirculating exhaust gas,
- wherein the purification device is configured as a filter device (29) that has a filter body (31) through which exhaust gas can pass but which is impermeable to the particles to be removed,
- wherein the filter body (31) is designed cylindrically,
- wherein the filter device (29) has a filter housing (30) in which the filter body (31) is inserted,
- wherein the filter housing (30) has two housing flanges (36, 37) with which, in the installed state, the filter housing (30) is detachable attached to complementary counter-flanges of the respective gas guiding lines, in particular of the exhaust-gas arrangement (10) and/or of an exhaust-gas recirculation system (15) and/or of the fresh-air apparatus (5), in order to exchange the filter body (31),
- wherein in the filter housing (30) an annular chamber (39) is designed that coaxially surrounds the filter body (31),
**characterized in**
**that** the filter body (31) comprises a flange section (42) which, is arranged between the respective housing flange (36, 37) and the respective counter-flange attached thereto for positioning and/or fixation of the filter body (31) in the filter housing (30) in the installed state.

2. The internal combustion engine as specified in claim 1,
**characterised in that**
the purification device (29) is arranged in an exhaust-gas recirculation arrangement (15) for recirculating exhaust gas from the exhaust-gas arrangement (10) to the fresh-air arrangement (5) or in the fresh-air arrangement (5) downstream from an introduction point (18) at which the exhaust-gas recirculation arrangement (15) is connected to the fresh-air arrangement (5).

3. The internal combustion engine as specified in claim 2,
**characterised in that**
the exhaust-gas recirculation arrangement (15) in a charged internal combustion engine (1) is configured as a low-pressure exhaust-gas recirculation arrangement (15).

4. The internal combustion engine as specified in any one of the claims 1 to 3,
**characterised in that**
the purification device (29) is arranged upstream from a charging device (22) arranged in the fresh-air arrangement (5).

5. The internal combustion engine as specified in any one of the claims 1 to 4,
**characterised in that**
the purification device (29) is arranged upstream from and exhaust-gas recirculation cooler (19) arranged in the exhaust-gas recirculation arrangement (15).

6. The internal combustion engine as specified in any one of the claims 1 to 5,
**characterised in that**
the purification device (29) is arranged upstream from and exhaust-gas recirculation valve (21) arranged in the exhaust-gas recirculation arrangement (15).

7. The internal combustion engine as specified in any one of the claims 1 to 6,
**characterised in that**
the filter body (31) has as a filter material (32) a mesh or a wire mesh or a filament or wire filaments or a cloth or a wire cloth, wherein the filter material consists in particular of a metallic substance.

8. The internal combustion engine as specified in any one of the claims 1 to 7,
**characterised in that**
the filter body (31) is designed in a pot-shaped manner.

9. The internal combustion engine as specified in any one of the claims 1 to 8,
**characterised in that**
a seal (41) is provided that is arranged between the flanges (36, 37) that are attached to one another in the installed state.

10. The internal combustion engine as specified in claim 9,
**characterised in that**
the seal (41) is configured integrally on the flange section (42).

11. The internal combustion engine as specified in any one of the claims 1 to 10,
**characterised in that**
the filter housing (30) is manufactured from one piece or a tubular body (38) and has one or two housing flanges (36, 37) attached thereto.

12. The internal combustion engine as specified in any one of the claims 1 to 11,
**characterised in that**
both of the housing flanges (36, 37) each respectively lies in a flange plane (46, 47), which are inclined toward one another, in particular around approximately 90°.

13. The internal combustion engine as specified in any one of the claims 1 to 12,
**characterised in that**
the purification device (29) is arranged in the exhaust-gas arrangement (10) downstream from a particle filter (14).

## Revendications

1. Moteur à combustion interne, notamment dans un véhicule automobile,
- comportant un bloc moteur (2), qui contient plusieurs chambres de combustion (3),
- comportant une installation d'air frais (5) pour alimenter de l'air frais dans les chambres de combustion (3),
- comportant une installation de gaz d'échappement (10) pour évacuer le gaz d'échappement des chambres de combustion (3),
- un dispositif de purification (29) pour éliminer les particules liquides ou solides du gaz d'échappement réintroduit,
- dans lequel le dispositif de purification est conçu comme un dispositif de filtrage (29), qui présente un corps de filtre (31) perméable aux gaz d'échappement et imperméable aux particules à éliminer,
- dans lequel le corps de filtre (31) a une configuration cylindrique,
- dans lequel le dispositif de filtre (29) présente un logement de filtre (30), dans lequel un corps de filtre (31) est inséré,
- dans lequel le logement de filtre (30) présente deux flasques de logement (36, 37), avec lesquelles le logement de filtre (30) en l'état monté est relié de manière amovible à des fins de remplacement du corps de filtre (31) aux contre-flasques complémentaires de la conduite de guidage de gaz respective, notamment de l'installation de gaz d'échappement (10) et/ou d'une installation de réintroduction de gaz d'échappement (15) et/ou de l'installation d'air frais (5),
- dans lequel dans le logement de filtre (30) une chambre annulaire (39) enveloppant coaxialement le corps de filtre (31) est réalisée,
**caractérisé en ce que**
le corps de filtre (31) présente une portion de flasque (42), qui en l'état monté à des fins de positionnement et/ou fixation du corps de filtre (31) est disposée dans le logement de filtre (30) entre la flasque de logement respectif (36, 37) et le contre-flasque respectivement relié à celui-ci.

2. Moteur à combustion interne selon la revendication 1,
**caractérisé en ce que**
le dispositif de purification (29) est disposé dans une installation de réintroduction des gaz d'échappement (15) pour réintroduire des gaz d'échappement provenant de l'installation de gaz d'échappement (10) dans l'installation d' air frais (5) ou est disposé dans l'installation d'air frais (5) en aval d'un point d'introduction (18), auquel l'installation de réintroduction de gaz d'échappement (15) est raccordée à l'installation d'air frais (5).

3. Moteur à combustion interne selon la revendication 2,
**caractérisé en ce que**
l'installation de réintroduction de gaz d'échappement (15) est conçue comme une installation de réintroduction de gaz d'échappement à basse pression (15) sur un moteur à combustion interne (1) chargé.

4. Moteur à combustion interne selon une des revendications 1 à 3,
**caractérisé en ce que**
le dispositif de purification (29) est disposé en amont d'un dispositif de charge (22) disposé dans l'installation d'air frais (5).

5. Moteur à combustion interne selon une des revendications 1 à 4,
**caractérisé en ce que**
le dispositif de purification (29) est disposé en amont d'un refroidisseur de réintroduction de gaz d'échappement (19) disposé dans une installation de réintroduction de gaz d'échappement (15).

6. Moteur à combustion interne selon une des revendications 1 à 5,
**caractérisé en ce que**
le dispositif de purification (29) est disposé en amont d'une soupape de réintroduction de gaz d'échappement (21) disposée dans une installation de réintroduction de gaz d'échappement (15).

7. Moteur à combustion interne selon une des revendications 1 à 6,
**caractérisé en ce que**
le corps de filtre (31) présente comme matériau de filtre (32) un tricot ou un tricot métallique ou un tissu ou tissu métallique ou une toile ou toile métallique, dans lequel le matériau de filtre est essentiellement constitué d'un matériau métallique.

8. Moteur à combustion interne selon une des revendications 1 à 7,
**caractérisé en ce que**
le corps de filtre (31) est conçu en forme de pot.

9. Moteur à combustion interne selon une des revendications 1 à 8,
**caractérisé en ce que**
un joint d'étanchéité (41) est prévu, qui en l'état monté est disposé entre les flasques (36, 37) fixés l'un sur l'autre.

10. Moteur à combustion interne selon la revendication 9,
**caractérisé en ce que**
le joint d'étanchéité (41) est conçu en un seul tenant sur la portion de flasque (42).

11. Moteur à combustion interne selon une des revendications 1 à 10,
**caractérisé en ce que**
le logement de filtre (30) est fabriqué en une seule pièce ou présente un corps tubulaire (38) et un ou deux flasques de logement (36, 37) montés sur celui-ci.

12. Moteur à combustion interne selon une des revendications 1 à 11,
**caractérisé en ce que**
les deux flasques de logement (36, 37) sont respectivement situés dans un plan de flasque (46, 47), dans lequel les deux plans de flasque (46, 47) sont inclinés l'un par rapport à l'autre, notamment d'environ 90°.

13. Moteur à combustion interne selon une des revendications 1 à 12,
**caractérisé en ce que**
le dispositif de purification (29) est disposé dans l'installation de gaz d'échappement (10) en aval d'un filtre à particules (14).
